(19) Europäisches Patentamt
European Patent Office
Office européen des brevets

(11) EP 1 606 353 B1

(12) **EUROPEAN PATENT SPECIFICATION**

(45) Date of publication and mention of the grant of the patent:
**28.05.2008 Bulletin 2008/22**

(21) Application number: **03708388.8**

(22) Date of filing: **20.03.2003**

(51) Int Cl.:
***C09B 67/20*** *(2006.01)*

(86) International application number:
**PCT/IB2003/001029**

(87) International publication number:
**WO 2004/083313 (30.09.2004 Gazette 2004/40)**

(54) **PROCESS FOR THE PREPARATION OF FLUORESCENT AND NON-FLUORESCENT PIGMENTS**

VERFAHREN ZUR HERSTELLUNG VON FLUORESZIERENDEN UND NICHTFLUORESZIERENDEN PIGMENTEN

PROCEDE DE PREPARATION DE PIGMENTS FLUORESCENTS ET NON FLUORESCENTS

(84) Designated Contracting States:
**AT BE BG CH CY CZ DE DK EE ES FI FR GB GR HU IE IT LI LU MC NL PT RO SE SI SK TR**

(43) Date of publication of application:
**21.12.2005 Bulletin 2005/51**

(73) Proprietors:
- **MCA Technologies GMBH**
  **CH-4105 Biel-Benken (CH)**
- **Kaul, Bansi Lal**
  **4105 Biel-Benken (CH)**

(72) Inventor: **KAUL, Bansi, Lal**
**CH-4105 Biel-Benken (CH)**

(74) Representative: **D'haemer, Jan Constant et al**
**Bammertackerweg 29**
**4105 Biel-Benken (CH)**

(56) References cited:

| | |
|---|---|
| **EP-A- 0 542 669** | **DE-A- 2 546 118** |
| **FR-A- 2 133 897** | **FR-A- 2 253 794** |
| **GB-A- 980 583** | **US-A- 5 837 013** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 606 353 B1

Printed by Jouve, 75001 PARIS (FR)

## Description

The present invention relates to a particularly advantageous process for preparing of fluorescent and non-fluorescent pigments derived from polymer soluble colorants and/or optical whiteners, to the products obtained by such process and to their use as valuable pigments.

BACKGROUND OF THE INVENTION

Fluorescent pigments are basically the solutions of organic fluorescent dyes in clear and colourless polymeric resins. Typically, a polymer is colored with a fluorescent dye preferably during the condensation/polymerisation process. The resulting colored resin is usually clear, brittle and friable. It is pulverised into a fine powder ,which is the final fluorescent pigment ( Charles E. Moore in Pigment Handbook I-H, Wiley N.Y. 1988). Postcuring and chemical modification can improve chemical and solvent resistance of such pigments (U.S.Pat. No.3,412,036). Most fluorescent pigments are based on toluenesulfonamide-melamine-formaldehyde resin matrix (U.S.Pat. No. 2,9838,873). Also claimed are the polyamide-type (U.S. Pat. No. 3,915,884), the polyester-type (U.S.Pat. No. 3,922,232) and the urethane-type (U.S. Pat. No. 3,741,907) dye substrates.

In known processes for the manufacture of fluorescent pigments, these thermoset resins are formed by polycondensation of the above mixture in bulk, in non-continuous batches. Such processes are described e.g. in U.S. Pat. No. 3,939,093, in GB 1,341,602 or in U.S. Pat. No. 3,812,051. On the average the reaction takes 2 hours, per batch, in the reactor. After complete polymerisation a hard, tough solid is obtained. This solid must be taken out of the polymerisation reactor as blocks. This can prove difficult and it is, therefore, often preferred to complete the reaction by casting the reacting mass, which is still pasty, into troughs and finishing the polymerisation in an oven. The blocks are then crushed and finally micronised. Such conventional processes for the manufacture are also described in Chem. Brit., 335 (1977).

The micronisation of this solid presents some difficulties: it requires a pregrinding before a fine microniser is fed, it being necessary for the two items of equipment to be cleaned after each batch. The U.S. Pat. No. 3,972,849 proposes the use of known grinding equipment, such as a ball mill.

The inconvenience of the conventional manufacturing processes and the disadvantages of the pigment particles obtained by these processes have led some manufacturers, on the other hand, to prefer the manufacture and the use of pigments based on thermoplastic resins whenever a high solvent and temperature resistance is not essential. U.S. Pat. No. 2,809,954, GB 869,801 and GB 980,583 describe the synthesis of pigments based on thermoplastic resins. These fusible, and hence heat-sensitive, resins do not lend themselves well to simple micronising by milling and hence to the manufacture of pigments of a fine and well-determined particle size. These resins generally require an additional stage of manufacture (dispersion, phase separation) to obtain pigment particles of well-determined particle size, which is described, for example, in U.S. Pat. Nos. 3,642,650 and 3,412,034.

The disadvantages of the two types of processes described above are avoided in the manufacture of amide (urea, melamine, and the like)/formaldehyde condensates of low molecular weight or of polyester alkyd resins, wherein to each type of said resins the colorant is fixed by absorption. Such processes are described for example in GB 748,848, GB 786,678 or in GB 733,856. However, the applications of such pigments are in practice limited to inks and paints, because the colorant molecules are bound to the condensates only by adsorption.

U. S. Pat.No. 5,989,453 describes a process wherein the reactants for the formation of the polycondensation resin and the colorant are introduced continuously into an extruder; the mixture is caused to travel forward in the extruder, at the end of reaction the mixture is withdrawn continuously from the extruder, and is deposited continuously onto a conveyor belt, broken up into thermoset flakes, and cooled, the conveyor belt having means for cooling and means for detaching the flakes from the belt. The process still leads to hard thermoset flakes which are still difficult to grind. Besides that, the unreacted potentially toxic monomers, such as formaldehyde, and low molecular weight condensation products remain occluded into the product. Such toxic components are set free, particularly at elevated temperatures during the actual coloring of plastics therewith, causing environmental, health & safety problems.

DESCRIPTION OF THE INVENTION

The objective of the present invention is to manufacture fluorescent and non-fluorescent pigments comprising a white or a colored compound incorporated in a resin which encapsulates, confines and immobilizes the colored compound, which pigments withstand the action of heat or of solvents, while avoiding the disadvantages of the cumbersome processes of the prior art such as multistep processes, the handling, the crushing and the difficulties of micronisation, and especially the elimination of the residual monomers and/or low molecular weight condensation products.

This objective is attained by a process for the manufacture of pigments, comprising a colored compound and/or a fluorescent whitener incorporated in a polycondensation resin by bulk polycondensation of the reaction mixture, wherein the reactants for the formation of said polycondensation resin and the colored or whitening compound are introduced in an apparatus submitting the reaction mixture to enhanced driving power as expressed by a Froude number >1. The mixture is caused

to react at a temperature between 80 °C and 300 °C, with or without vacuum, at the same time removing during and/or at the end the of the reaction any residual unreacted potentially toxic monomers and/or low molecular weight condensation products formed. The liquid resin composition is then cooled and allowed to solidify under continuing driving power, i.e. stirring in the same reactor. Unlike any state-of-the art processes, pigments are directly formed in a broken-up crushed state so that the subsequent micronisation in either not required and/or is facilitated. Furthermore, in situ crushing and micronisation also liberate any occluded monomers and low molecular weight condensation products enabling their easy elimination during the process of the present invention.

The Froude number Fr is defined by the formula

$$Fr = \frac{v^2}{r.g}$$

in which v is the velocity of the operative part, r is the radius of the operative part and g is the gravity of the treated materials. Such effect is obtained at overcritical speed > 100 r/min and can be achieved independently of the appartus size. Examples of such apparatus are e.g. "All In One Reactor"® (Draiswerke GmbH, Germany), a kneader like the TurbuKneader® of the same company, a paddle dryer like the Turbudry® of the same company or a related system.

Also disclosed are compositions comprising non-fluorescent colorants and certain polyester or polyamide resins as well as a process for the preparation of the compositions. The products are useful for coloring polymeric material.

Particularly suitable polycondensation resins to be used according to the instant invention are products which are inelastic, non-fiber-forming and brittle and which consequently may easily be converted into particulate form. The resins should moreover have a relatively high softening point, preferably of more than about 100° C, because otherwise at the temperatures which arise during milling the particles of resin may agglomerate and stick together. The resins should also have little or no solubility in the solvents conventionally used in processing, such as e.g. painters' naphtha, toluene and xylenes and also should not swell in these solvents. Furthermore, the resins should exhibit good transparency and adequate fastness to light. Resins meeting these requirements are generally known, and some of them have already been used for the preparation of daylight fluorescent pigments.

Suitable polycondensation resins are for example those, wherein the reactants for the formation of said polycondensation resins are

(a) at least one component A chosen from aromatic sulfonamides containing 2 hydrogens bonded to the nitrogen of the sulfonamide group,

(b) at least one component B chosen from substances containing 2 or more $NH_2$ groups, each of the said $NH_2$ groups being bonded to a carbon, the said carbon being bonded by a double bond to an =O, =S or =N, and

(c) at least one aldehyde component C.

Among the substances capable of forming the component A according to the present invention, there will be mentioned especially benzenesulfonamide and benzenesulfonamide derivatives of general formula:

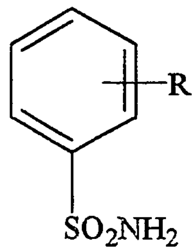

wherein the groups R are hydrogen, alkyl or aryl groups. A particularly preferred substance A is para-toluenesulfonamide, ortho-toluenesulfonamide or mixtures of aromatic sulfonamides, such as mixtures of ortho- and para-toluene-sulfonamide (e.g. a 50:50 mixture of these components), can also be employed and are available on the market. $C_1$-$C_4$ alkyl-benzenesulfonamides, e.g. are also available commercially.

Among the substances which can be employed as component B according to the present invention there will be mentioned especially urea ($NH_2CONH_2$), thiourea ($NH_2CSNH_2$), guanidine $(NH_2)_2C{=}NH$, carbamylurea ($C_2H_5N_3O_2$), succinamide ($C_4H_8N_2O_2$), among the non-cyclic compounds; among cyclic compounds and more particularly among nitrogenous heterocyclic rings there will be mentioned the molecules containing a plurality of $NH_2$ groups, each of these groups being bonded to a carbon of a heterocyclic ring, the said carbon being linked by a double bond to a nitrogen of the heterocyclic ring; these heterocyclic rings include the triazole, diazine, triazine and pyrimidine nuclei; there will be mentioned in particular the guanamine derivatives of general formula:

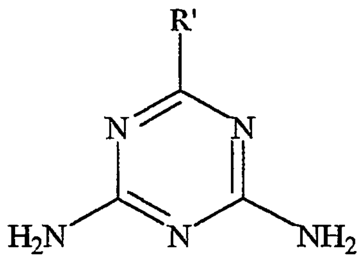

where R' is hydrogen, an aliphatic radical, an aromatic radical, a saturated or unsaturated cycloaliphatic or alkoxyaryloxy radical. Benzoguanamine may be mentioned among the preferred compounds B.

A compound B which is particularly preferred when it is intended to obtain a thermoset resin is melamine (where R' is $NH_2$). Diguanamines and triguanamines (whose synthesis from the corresponding nitriles and from dicyanodiamide is known, furthermore), or mixtures of the above substances can also be employed as component B according to the present invention, as well as the particular triazine compounds described in the U.S. Pat. No. 3,838,063. A certain amount of the component B according to the invention may be replaced by an isocyanuric ring containing compound, such as isocyanuric acid or its alkyl or aryl esters, or its N-alkyl or N-arylderivatives, respectively; pigment compositions comprising such resins are disclosed in U. S. Pat. No. 3,620,993.

The aldehyde or the mixture of aldehydes forming the component C according to the present invention are formaldehyde, acetaldehyde, propionaldehyde (higher aldehydes can be employed but do not offer any particular advantage within the meaning of the present invention). A particularly preferred compound is paraformaldehyde $(CH_2O)_n$, because of its ease of use.

In the process according to the present invention the concentration of component B, which is preferably between approximately 13% and 40% by weight, of the weight of sulfonamide component A in the reaction mixture, can be taken to values which are markedly higher than those employed in the processes for the manufacture of thermoplastic resins. The concentration of component C in the mixture is preferably between 27% and 40% by weight of the sulfonamide.

A harder and more brittle material is thus obtained, which lends itself better to micronisation and which withstands better the action of heat and of solvents. In the case where the amine chosen as component B is melamine, a decrease in the cost of manufacture is also obtained when the proportion of B is increased, given the low cost of this product.

The decrease in the cost of manufacture of the pigments according to the present invention particularly results from the incorporation of many unit operations such as condensation, pouring out of the reaction mass, solidification of the mass, post curing in a separate oven and pre-grinding, into a single operation. Moreover, the poly-condensation reaction is better controlled than in a continuous process.

Further examples of suitable polycondensation resins are i.a. polyamide resins, polyester resins, polycarbonates or polyurethanes. Other suitable resins are polyester/polyamide resins prepared by the reaction of aminoalcohols or aminophenols with polycarbocylic acids, such as the resins described in U.S. Pat. No. 4,975,220.

Particularly suitable polycondensation resins are polyester resins and especially polyamide resins.

Among the preferred resins are crosslinked polyester resins from aromatic polycarboxylic acids or their anhydrides, particularly aromatic dicarboxylic and tricarboxylic acids, such as phthalic acid, isophthalic acid or trimellitic acid, and bifunctional or polyfunctional alcohols, such as ethylene glycol, glycerol, pentaerythritol, trimethylolpropane and neopentyl glycol. Especially preferred are polyester resins from phthalic anhydride and pentaerythritol. Such preferred polyester resins are described for example in DE 961,575 or in the above mentioned U.S. Pat. No. 3,972,849.

Other preferred polyester resins are partially crystalline thermoplastic opaque polyester resins which have a substantial number of amorphous regions and which contain from 35 to 95 equivalent % of crystallinity-producing monomers and from 5 to 65 equivalent % of amorphous producing monomers. Such resins and their use for the preparation of fluorescent pigments are described in EP-A 489,482, especially on page 2, line 57 through page 4, line 40 which are hereby incorporated by reference.

Other preferred polycondensation resins to be prepared and used according to the invention are polyamide resins formed by the reaction of a polyfunctional amine with both a polycarboxylic acid and a monocarboxylic acid, said polyamide being in the molecular weight range from about 400 to about 2500. Such polyamide resins are substantially linear and have at least one carboxy group remaining on the majority of molecules, which permits a thermoplasitc resin to be formed which is extremely friable and grindable. The monocarboxylic acid may be added as such or may be formed in situ by reacting a monoamine and a dicarboxylic acid in sufficient quantity to form the desired corresponding monocarboxylic co-condensate to function as a terminator and control the molecular weight of the resin formed. Optionally, whether or not a monocarboxylic acid is added as such, or is formed in situ, a sufficient amount of stabilizing compound of an element from Groups IIA and IIB may be added to further stabilize the pigment. Such preferred polyamide resins are described in the U.S. Pat. No. 3,915,884, which document is incorporated herein by reference.

Preferred polyfunctional amines for the preparation of the instant polyamide resins are polyfunctional, preferably difunctional, primary amines. Particularly preferred are polyfunctional alicyclic primary amines, which form the most friable resins. Most preferred is isophorone diamine (1-amino-3-aminomethyl-3,5,5-trimethyl cyclohexane). Other suitable amines are aliphatic amines having an aromatic ring, such as the m- and p-xylylene diamines; aliphatic polyfunctional primary amines, such as ethylene diamine, diethylene triamine and the like.

Preferred monocarboxylic aromatic acids are benzoic acid and substituted benzoic acids, such as p-toluic, o-toluic, and 4-methoxy benzoic acid.

Preferred aromatic polycarboxylic acids are those which have carboxy groups on noncontiguous carbon atoms, such as isophthalic acid, terephthalic acid, trimesic acid and dicarboxy and tricarboxy naphthalene.

Other preferred polyamide resins are prepared by reaction of a diamine with an excess stoichiometric amount of a diacid. Such resins are described in U.S. Pat. No. 5,094,777, especially in column 2, line 13 through column 4, line 22, which are hereby incorporated by reference.

When a stabilizing compound of elements in Group IIA and Group IIB of the periodic table of elements is used, such compounds should preferably be compatible with the co-condensate and the coloring material. Suitable compounds are e.g. oxides, carbonates or organic acid salts of Group II elements, such as magnesium oxide, magnesium carbonate, zinc oxide, zinc stearate, calcium hydroxide and the like. Zinc oxide is preferred.

Other preferred polycondensation resins to be prepared and used according to the invention are epoxide resins based on bisphenol-A diglycidyl ethers and crosslinked with polyhydric phenols, such as bisphenol-A, with polycarboxylic acid anhydrides, with Lewis acids and particularly with dicyandiamides and related compounds; hybrid polyesters, such as solid saturated polyester resins having free carboxyl groups and being crosslinked with epoxide resins; polyesters, such as solid saturated polyesters having free carboxyl groups and being crosslinked with triglycidylisocyanurate (TGIC); polyurethanes, such as solid saturated polyesters with free hydroxyl groups being crosslinked with polyisocyanates.

The polycondensation resins to be used according to the instant invention may, if appropriate, also contain other additives, such as antioxidants, stabilizing compounds, such as UV absorbers or light stabilizers as e.g. the hindered amine light stablizers (HALS). Such stabilizers are well known in the art.

The U.S. Pat. No. 3,915,884 and U.S. Pat. No. 5,094,777 disclose, as mentioned above, the preferred polyamides and their use for the manufacture of fluorescent pigments. However according to that reference the resins are synthesized by a state-of-the-art process. Such a process is characterized by all the disadvantages discussed above for similar prior art processes.

Surprisingly, with the process of the instant invention a much faster, simpler and more convenient synthesis of the above polycondensation resins and of the pigments, particularly fluorescent pigments, is provided.

The pigments obtained according to the invention comprise preferably at least one colored or white compound which is soluble or partially soluble in the resin composition, the preferred concentration of said substance being between 1% and 5% by weight of the pigments. When non-fluorescent dyes, e.g. solvent dyes are used, the preferred concentration may be up to 10% by weight of the pigments.

Colorants and white materials capable of forming a solid solution in a resin are furthermore known and are, in general, listed in the Colour Index. Rhodamines, coumarines, xanthenes, perylenes and naphthalimides will be mentioned by way of example, no limitation being implied. Examples of appropriate colorants are also compounds described in GB 1,341,602, U.S. Pat. No. 3,939,093, U.S. Pat. No. 3,812,051, DE 3,703,495 and in EP-A 422,474.

Other suitable colorants are diketo-pyrrolo-pyrroles (DPP), especially those which are soluble or at least partially soluble in the resins used. Such DPP compounds are known and are described e.g. in U.S. Pat. No. 4,415,685; U.S. Pat. No. 4,810,802; U.S. Pat. No. 4,579,949 and especially in U.S. Pat. No. 4,585,878.

The present invention is particularly adapted to the manufacture of daylight fluorescent pigments, that is to say pigments whose colored composition comprises one or more Substances which are fluorescent in daylight and/or optionally one or more common colored substances. However, it is not limited to pigments of this type: by including in a resin according to the invention a compound which does not absorb in the visible but which fluoresces when it is excited by UV radiation, "transparent" pigments are obtained, which can be employed for particular applications such as invisible inks.

The pigments obtained according to the invention are suitable for a wide variety of applications, such as paper coating, textile printing, preparation of paints, plastisols, pastes, inks, markers, toners for non-impact printing or cosmetics.

The instant pigments are characterized by high heat stability and high light stability. Therefore they are particularly suitable for the mass coloration of polymers, particularly of those thermoplastic polymers in which the instant pigments can easily be dispersed. Suitable such polymers are e.g. polyesters, polyamides, PVC-polymers, ABS-polymers, styrenics, acrylics or polyurethanes. Particularly suitable polymers are polyolefins, especially polyethylene or polypropylene. It is particularly convenient to use the instant pigments for the preparation of fluorescent polymer, especially polyolefin masterbatches. The instant pigments, particularly those prepared with basic dyes or with solvent dyes, can also advantageously be used in printing inks, e.g. for textile printing.

The present invention also makes it possible to manufacture nonfluorescent colored pigments.

The concentration of the fluorescent substances in the mixture which is to be polycondensed may be

adjusted so that the intensity of colour and/or fluorescence are/is maximised. After polycondensation and micronisation the local microconcentration of colored substances dissolved in the polymeric matrix remains constant whatever the subsequent overall dilution of the pigment powder, according to its use.

In the process according to the present invention the polycondensation of the reaction mixture is preferably performed in a temperature range lying between 80° C and 300° C.

When said polycondensation resin is a polyester resin, a hybrid polyester resin, a polyamide resin, an epoxide resin or a polyurethane resin, the temperature is more preferably between 160° C and 300° C, especially preferred between 180° C and 270° C.

When said polycondensation resin is a melamine formaldehyde resin obtained by the polycondensation of components A, B, and C described above, the reaction is preferably performed in a temperature range lying between 100° C and 250° C.

The products are preferably micronised to a particle size of between 0.5 and 20 μm. The particularly preferred mean particle size is between 1 and 7 μm. An "All In One Reactor" ® of Draiswerke Mannheim, Germany has been found particularly suited as a reactor for implementing the process according to the present invention.

The characteristics and the advantages of the present invention will be understood better with the aid of the examples below. A range of shades extending from yellow to green and black can be produced by mixing e.g. the following colorants, listed in the Colour Index:

Solvent Yellow 43
Solvent Yellow 44 (C.I. No. 56200)
Solvent Yellow 85
Solvent Yellow 98
Solvent Yellow 114
Solvent Yellow 163
Solvent Yellow 185
Solvent Yellow 172
Solvent Orange 63
Solvent Red 196
Solvent Red 197
Solvent Blue 104
Solvent Green 7
Basic Yellow 13
Basic Yellow 19
Basic Yellow 40
Basic Yellow 45
Basic Red 1 (Rhodamine 6G, C.I. No. 45160)
Basic Violet 10 (Rhodamine B, C.I. No. 45170)
Basic Blue 7 (C.I. No. 42595)
Disperse Yellow 232
Solvent Blue 104
Solvent Orange 60

A fluorescent whitening agent may also be used alone or be added to colorants.

EXAMPLE 1

Manufacture of Colored Melamine Formaldehyde condensation product:

A mixture comprising, by weight, 3420 g of p-toluenesulfonamide, 1500 g of paraformaldehyde, 720 g of melamine and 180 g Solvent Yellow 43 colorant is introduced at 20-25° C in a 10000 ml "All In One Reactor "® (Drais Mannheim Germany).

Under stirring and nitrogen flow the mixture is heated to 170° C within 60 minutes. The temperature is maintained at 170° C for fifteen minutes. The mixture is cooled under stirring to 70° C and kept at 70° C. The material starts solidifying at 110 to 115° C. The brittle friable material thus formed largely disintegrates into an almost semi-powdery material. The reaction mixture is again heated to 100° C in 30 minutes and kept at 100° C for 30 minutes for post curing and the elimination of any residual formaldehyde. The mixture is cooled to 50° C.

The material is emptied into a polyethylene sack, tightly fitted to the outlet of the reactor. The resin mass can be pulverised by impact milling to a still finer powder for example as described in example 2.

EXAMPLE 2

Micronisation

The material recovered from the reactor as described in example 1 is fed into a mill of the air jet microniser type (Alpine 200 AFG, Augsburg).

The operating conditions are: dry air at 7 bars, room temperature, 25 kg/hour flow rate.

More than 99% of the micronised material is between 0.9 and 14 μm in particle size.

EXAMPLE 3

According to the processes of example 1 and example 2, a fluorescent pink pigment is prepared from a mixture having 70% by weight of para-toluenesulfonamide, 18% by weight of paraformaldehyde, 9% by weight of melamine (dyed by 1.5% by weight of Basic Red 1 and 1.5% by weight of Basic Violet 10, the amount of colorant being relative to the total mixture).

EXAMPLE 4

A fluorescent pink pigment composition called masterbatch (cylindrical granulate forms with length: 5 mm-diameter: 2 mm) is obtained by including 35 g of pink fluorescent pigment of example 3 in 65 g of a polyvinyl chloride mixture composed of 55% of polyvinyl chloride, 31 % of dioctyl phthalate and 2% of an organo-tin stabilizer, and passing said mixture through an extruder at 125° C. The strands of the colored masterbatch are cooled and cut by state-of-the art processes to provide the desired granulates.

EXAMPLE 5

Manufacture of Colored Polyester Resin:

A mixture comprising, by weight, 2740 g of phthalic anhydride, 1225 g of pentaerythritol and 40 g of Rhodamine B is introduced at 20-25° C in a 10000 ml "All In One Reactor "® of (Drais Mannheim Germany). Under stirring and nitrogen flow the mixture is heated to 240° C within 120 minutes. The temperature is maintained at 240° C for fifteen minutes. The mixture is cooled to 50° C and kept at 50° C. The brittle friable material thus formed largely disintegrates into an almost semi-powdery material. The material is emptied into a polyethylene sack, tightly fitted to the outlet of the reactor.

EXAMPLE 6

Micronisation

The material recovered from the reactor is fed into a mill of the air jet microniser type. The operating conditions are: dry air at 7 bars, room temperature, 20 kg/hour flow rate. The average particle size of the pigments obtained depends on the flow rate and ranges from 1 to 15 μm for more than 99% of the micronised material.

EXAMPLE 7

Manufacture of Colored Polyamide Pigment and its Micronisation:

According to the process of examples 5 and 6, a fluorescent yellow pigment is prepared from a mixture having 35.3% by weight of isophorone diamine, 34.5% by weight of isophthalic acid, 25.3% by weight of benzoic acid, 3.3% by weight of zinc oxide and 1.6% by weight of Solvent Yellow 98 (C.I. No. 56238).

EXAMPLE 8

Preparation of a Masterbatch:

A fluorescent pink pigment composition called masterbatch (cylindrical granulate forms with length: 5 mm-diameter: 2 mm) is obtained by including 30 parts of pink fluorescent polyester pigment of example 5 and micronised as described in example 6 in 70 parts of a polyethylene mixture composed of 64 parts of low density polyethylene, 5 parts of polyethylene wax AC 540.RTM. Allied Chemical Co.) and 1 part of zinc stearate, and passing said mixture through an extruder at 155° C. The filaments obtained are cooled to room temperature and granulated by state-of-the-art processes.

EXAMPLE 9

Preparation of a Masterbatch:

A fluorescent yellow pigment composition called masterbatch is obtained as described in example 8 above by using 30 parts of the yellow fluorescent polyamide pigment prepared in example 7 and micronised as described in example 6.

EXAMPLE 10

Manufacture of Polyamide based Pigment and its Micronisation:

According to the process of Examples 5 and 6 a fluorescent pink pigment is prepared from a mixture having 14.9% by weight of benzoic acid, 41.5% by weight of isophorone diamine, 40.5% by weight of isophthalic acid and 3.1% by weight of Rhodamine B (C.I. No. 45170).

EXAMPLE 11

According to the process of Examples 5 and 6 a fluorescent yellow pigment is prepared from a mixture having 10.5% by weight of benzoic acid, 43.7% by weight of isophorone diamine, 42.7% by weight of isophthalic acid and 3.1% by weight of C.I. Basic Yellow 40.

EXAMPLE 12

According to the process of examples 5 and 6 a fluorescent pink pigment is prepared from a mixture having 29.2% by weight of ethylene glycol, 69.8% by weight of phthalic anhydride and 1% by weight of Rhodamine B.

EXAMPLE 13

According to the process of examples 6 and 7 a blue pigment is prepared from a mixture having 14.9% by weight of benzoic acid, 41.5% by weight of isophorone diamine, 40.5% by weight of isophthalic acid and 3.1% by weight of Fliso Blue 630.RTM. (BASF AG).

APPLICATION IN PVC MASSTONE

The preparation of a 0.1% colored PVC sheet is performed as follows: 100 parts of clear PVC are mixed with 0.1 part of pigment obtained according to Example 1 for 2 minutes. The mixture is passed between two rollers for 5 minutes, the front roller being heated at 130° C and the rear roller being heated at 135° C. Then the sheet is pressed under a pressure of 25 tones between two

chromium-plated steel plates heated at 165° C, for 5 minutes. The pressed sheet is colored with a red shade.

APPLICATION IN PVC WHITE REDUCTION

The preparation of a 0.1% colored PVC sheet with white is performed as follows: 100 parts of PVC-white ( containing 5% TiO) are mixed with 0.1 part of pigment for 2 minutes. The mixture is passed between two rollers for 8 minutes, the front roller being heated at 160° C and the rear roller being heated at 165° C. Then the sheet is pressed under a pressure of 25 tones between two chromium-plated steel plates heated at 160° C, for 5 minutes.

APPLICATION IN COATINGS MASSTONE

The preparation of the alkydmelamine resin coating is performed as follows: 3.6 g of pigment, 26.4 g of clear alkydmelamine paint (35%) and 85 g of glass beads are stirred in a Skandex stirrer for 30 minutes. 30 g of this preparation are mixed with 60 g of clear alkydmelamine paint (55.8%). The dispersion is sprayed on a cardboard sheet, air-dried for 15 minutes and baked at 140° C in an oven for 30 minutes.

APPLICATION IN COATINGS WHITE REDUCTION

The preparation of the alkydmelamine resin coating is performed as follows: 3.6 g of pigment, 26.4 g of clear alkydmelamine paint (35%) and 85 g of glass beads are stirred in a Skandex stirrer for 30 minutes. 7.5 g of this preparation are mixed with 20 g of alkydmelamine white paint (containing 30% TiO). The dispersion is sprayed on a cardboard sheet, air-dried for 15 minutes and baked at 140° C in an oven for 30 minutes.

APPLICATION IN COATINGS FOR PAPER

25 parts of blue pigment prepared in example 13, 25 parts of carbital 95, 25 parts of water, 25 parts of carbital 95, 25 parts of latex BASF SD 215.RTM are mixed together. The composition can be used for coating paper.

APPLICATION FOR PRINKING INKS

A fluorescent pink ink is prepared from a mixture having 100 parts of binder (Ecocryl.RTM. 0254, W. SIPPO Co., Villers Saint Paul, France), 20 parts of a fixer (fixer 99HD.RTM., W. SIPPO Co.), 10 parts of emulsifier (ATEPRINT E9183.RTM., Dr. Th. BOHME, Germany), 820 parts of water and 20 parts of the pink pigment obtained in example 8. The fluorescent ink is used for application by the screen process (or any similar process) on cotton fabric, which is then heated (dry heat) for 3 minutes at 150° C.

**Claims**

1. A process for the manufacture of pigments, comprising a colored compound and/or a fluorescent whitener incorporated in a polycondensation resin by bulk polycondensation of the reaction mixture, wherein the reactants for the formation of said polycondensation resin and the colored or whitening compound are introduced in an apparatus submitting the reaction mixture to enhanced driving power as expressed by a Froude number >1, the reaction mixture is caused to react at a temperature between 80° C and 300° C and the liquid resin composition is cooled and allowed to solidify under continuing driving power.

2. A process according to claim 1, wherein the said coloured compound comprises at least one substance which is fluorescent in daylight and the concentration of the said fluorescent substance is between 0.1% and 10 % by weight of the pigments.

3. A process according to claim 1, wherein the said coloured compound comprises at least one substance which is non-fluorescent in daylight and the concentration of the said non-fluorescent substance is between 0.1% and 10 % by weight of the pigments.

4. A process according to claim 1, wherein the said materials are micronised to a mean particle size between 0.5 and 20 μm.

5. A process according to claim 1, wherein the reactants for the formation of said polycondensation resin arc

   (a) at least one component A which is an aromatic sulfonamide containing 2 hydrogens bonded to the nitrogen of the sulfonamide group,
   (b) at least one component B which is a substance containing 2 or more $NH_2$ groups, each of the said $NH_2$ groups being bonded to a carbon, the said carbon being bonded by a double bend to an =O, =S or =N, and
   (c) at least one aldehyde component C.

6. A process according to claim 5, wherein the concentration of the component B is between 13% and 40% by weight of the component A and the concentration of component C is between 27% and 40% by weight of the component A.

7. A process according to claim 5, wherein the temperature is maintained between 100° C and 250° C.

8. A process according to claim 1, wherein said polycondensation resin is a polyester resin, a hybrid polyester resin, a polyamide resin, an epoxide resin or

a polyurethane resin.

**9.** A process according to claim 8, wherein said polyester resin is a crosslinked polyester resin from aromatic polycarboxylic acids or their anhydride and bifunctional or polyfunctional alcohol or wherein said polyester resin is a substantially crystalline thermoplastic opaque polyester resin prepared by reacting mixtures of linear monomers with branched or substituted monomers.

**10.** A process according to claim 8, wherein said polyamide resin is formed by the reaction of a polyfunctional amine with both a polycarboxylic acid and a monocarboxylic acid, said polyamide being in the molecular weight range from about 400 to about 2500 or wherein said polyamide resin is formed by reacting a diamine with an excess stoichiometric amount of a diacid.

## Patentansprüche

**1.** Verfahren zur Herstellung von Pigmenten, welche eine farbige Verbindung und/oder ein fluoreszierender Aufheller, durch Polykondensation in der Masse in ein polykondensiertes Harz eingearbeitet, sind, wobei man die Reagenzien für die Bildung dieser Polykondensationsharze und die farbige Verbindung oder der Aufheller in ein Gerät gibt, welches das Reaktionsgemisch einer erhöhten Einwirkungskraft, ausgedrückt durch eine Froude-Zahl >1, aussetzt, man das Reaktionsgemisch reagieren lässt bei einer Temperatur zwischen 80°C und 300°C, die flüssige Harzmischung kühlt und unter weiterer Einwirkungskraft fest werden lässt.

**2.** Verfahren gemäss Anspruch 1, worin die farbige Verbindung aus mindestens einer Verbindung besteht, die im Tageslicht fluoresziert, und die Konzentration dieser fluoreszierenden Verbindung zwischen 0.1% and 10 Gew.% der Pigmente beträgt.

**3.** Verfahren gemäss Anspruch 1, worin die farbige Verbindung aus mindestens einer Verbindung besteht, die im Tageslicht nicht fluoresziert, und die Konzentration dieser nicht fluoreszierenden Verbindung zwischen 0.1% and 10 Gew.% der Pigmente beträgt.

**4.** Verfahren gemäss Anspruch 1, worin die Bestandteile zu einer durchschnittlichen Teilchengrösse zwischen 0.5 und 20 μm mikronisiert werden.

**5.** Verfahren gemäss Anspruch 1, worin die Reagenzien für die Bildung dieser Polykondensationsharze

(a) mindestens eine Komponente A, die ein aromatisches Sulfonamid mit 2 Wasserstoffatomen am Stickstoffatom der Sulfonamidgruppe ist,
(b) mindestens eine Komponente B, die eine Verbindung mit 2 oder mehr $NH_2$-Gruppen ist, wobei jede dieser $NH_2$-Gruppen an einem Kohlenstoffatom gebunden ist und dieses Kohlenstoffatom mit einer Doppelbindung an eine =O, =S oder =N gebunden ist, und
(c) mindestens eine Aldehydkomponente C sind.

**6.** Verfahren gemäss Anspruch 5, worin die Konzentration der Komponente B zwischen 13% und 40 Gew.% der Komponente A und die Konzentration der Komponente C zwischen 27% und 40 Gew.% der Komponente A ist.

**7.** Verfahren gemäss Anspruch 5, worin die Temperatur zwischen 100°C und 250°C gehalten wird.

**8.** Verfahren gemäss Anspruch 1, worin das Polykondensationsharz ein Polyesterharz, ein Hybridpolyesterharz, ein Polyamidharz, ein Epoxidharz oder ein Polyurethanharz ist.

**9.** Verfahren gemäss Anspruch 8, worin das Polyesterharz ein vernetztes Polyesterharz von aromatischen Polycarbonsäuren oder deren Anhydriden und bifunktionalen oder polyfunktionalen Alkoholen ist oder worin das Polyesterharz ein hauptsächlich kristallines thermoplastisches undurchsichtiges Polyesterharz ist, hergestellt durch Reaktion von Mischungen von linearen Monomeren mit verzweigten oder substituierten Monomeren.

**10.** Verfahren gemäss Anspruch 8, worin das Polyamidharz gebildet wird durch die Reaktion eines polyfunktionalen Amins mit sowohl einer Polycarbonsäure als auch einer Monocarbonsäure, wobei das Molekulargewicht dieses Polyamids im Bereich von ungefähr 400 bis ungefähr 2500 liegt, oder worin dieses Polyamidharz durch Reaktion eines Diamins mit einer überschüssigen stöchiometrischen Menge einer Dicarbonsäure gebildet wird.

## Revendications

**1.** Un procédé de préparation de pigments, qui sont un composé coloré et/ou un azurant fluorescent incorporé dans une résine de polycondensation par polycondensation en masse du mélange de réaction, dans lequel les réactants pour la formation de cette résine de polycondensation et le composé coloré ou azurant sont introduits dans un appareil soumettant le mélange de réaction à une force d'activation exprimée par un nombre Froude >1, le mélange de réaction est induit à réagir à une température entre

80°C et 300°C et la composition de résine liquide est refroidie et laissée se solidifier sous une force d' activation continue.

**2.** Un procédé selon la revendication 1, dans lequel le composé coloré comprend au moins une substance fluorescente à la lumière du jour et la concentration de cette substance fluorescente est entre 0.1 % et 10 % en poids des pigments.

**3.** Un procédé selon la revendication 1, dans lequel le composé coloré comprend au moins une substance non-fluorescente à la lumière du jour et la concentration de cette substance non-fluorescente est entre 0.1 % et 10 % en poids des pigments.

**4.** Un procédé selon la revendication 1, dans lequel les matériaux sont micronisés à une grandeur de particules entre 0.5 et 20 μm.

**5.** Un procédé selon la revendication 1, dans lequel les réactants pour la formation de cette résine de polycondensation sont

(a) au moins un composant A qui est un sulfonamide aromatique contenant 2 atomes d'hydrogène liés au nitrogène du groupe sulfonamide,
(b) au moins un composant B qui est une substance contenant 2 groupes $NH_2$ ou plus, chacune de ces groupes $NH_2$ étant liée à un atome carbonique et cet atome carbonique étant lié par une double liaison à un =O, =S ou =N, et
(c) au moins un composant aldéhyde C.

**6.** Un procédé selon la revendication 5, dans lequel la concentration du composant B est entre 13% et 40% en poids du composant A et la concentration du composant C est entre 27% et 40% en poids du composant A.

**7.** Un procédé selon la revendication 5, dans lequel la température est maintenue entre 100° C et 250° C.

**8.** Un procédé selon la revendication 1, dans lequel la résine de polycondensation est une résine de polyester, une résine de polyester hybride, une résine de polyamide, une résine d'époxide ou une résine de polyuréthane.

**9.** Un procédé selon la revendication 8, dans lequel la résine de polyester est une résine réticulée de polyester à partir d'acides aromatiques polycarboxyliques ou leurs anhydrides et des alcools bifonctionnels ou polyfonctionnels, ou dans lequel la résine de polyester est une résine de polyester substantiellement crystalline thermoplastique et opaque preparée par réaction de mélanges de monomères à chaîne droite avec des monomères ramifiés ou substitués.

**10.** Un procédé selon la revendication 8, dans lequel la résine de polyamide est formée par la réaction d'une amine polyfonctionelle avec à la fois un acide polycarboxylique et un acide monocarboxylique, cette résine polyamide ayant un poids moléculaire d'environ 400 jusqu' à environ 2500, ou dans lequel cette résine polyamide est formée par la réaction d'une diamine avec un excès stoechiométrique d'un acide bifonctionnel.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3412036 A
- US 29838873 B
- US 3915884 A
- US 3922232 A
- US 3741907 A
- US 3939093 A
- GB 1341602 A
- US 3812051 A
- US 3972849 A
- US 2809954 A
- GB 869801 A
- GB 980583 A
- US 3642650 A
- US 3412034 A
- GB 748848 A
- GB 786678 A
- GB 733856 A
- US 5989453 A
- US 3838063 A
- US 3620993 A
- US 4975220 A
- DE 961575
- EP 489482 A
- US 5094777 A
- DE 3703495
- EP 422474 A
- US 4415685 A
- US 4810802 A
- US 4579949 A
- US 4585878 A

### Non-patent literature cited in the description

- **CHARLES E. MOORE.** Pigment Handbook I-H. Wiley, 1988
- *Chem. Brit.,* 1977, 335